# FASCICULE DE BREVET EUROPEEN

(11) **EP 1 014 523 B1**
(45) Date de publication et mention de la délivrance du brevet: **02.07.2008**
(21) Numéro de dépôt: 99402965.0
(22) Date de dépôt: 29.11.1999
(51) Int. Cl.: H02G 3/08, H02G 3/12

(54) **Boîte d'encastrement, notamment pour cloison sèche**
Einbaudose, insbesondere für Trockentrennwand
Flush mounted box for dry wall

(30) Priorité: 22.12.1998 FR 9816191
(43) Date de publication de la demande: 28.06.2000
(73) Titulaire: LEGRAND FRANCE, 87000 Limoges (FR); LEGRAND SNC, 87000 Limoges (FR)
(72) Inventeur: Vergne, Raphaël, 87000 Limoges (FR)
(74) Mandataire: Santarelli

(56) Documents cités:
- DE-U- 7 734 966
- US-A- 4 616 104
- US-A- 4 667 840

## Description

La présente invention concerne d'une manière générale les boîtes d'encastrement du type de celles mises en oeuvre pour l'implantation d'un quelconque appareillage, et, notamment, d'un quelconque appareillage électrique, au sein même d'une cloison.

Elle vise plus particulièrement, mais non nécessairement exclusivement, le cas où cette cloison est une cloison sèche.

Ainsi qu'on le sait, une cloison sèche est une cloison qui, formée, le plus souvent, d'éléments préfabriqués convenablement assemblés, présente, intérieurement, des vides ou est susceptible d'être aisément évidée, tout en comportant, en façade, un parement continu, constitué, par exemple, de plaques de plâtre dûment jointoyées.

Du parement dépendent certaines caractéristiques, et, notamment, la performance au feu et l'isolation phonique et/ou thermique.

Or, pour l'implantation d'une boîte d'encastrement, il est nécessaire d'ajourer ce parement, au contour de cette boîte d'encastrement.

Il en résulte, inévitablement, un affaiblissement local des caractéristiques de l'ensemble, le matériau constitutif de la boîte d'encastrement venant à cet endroit en substitution au parement n'ayant le plus souvent que des caractéristiques inférieures à celles du matériau constitutif de celui-ci, notamment en ce qui concerne la performance au feu.

Pour minimiser, sinon intégralement pallier, cet inconvénient, il a été proposé, de longue date, une boîte d'encastrement permettant une reconstitution au moins partielle de certaines au moins des caractéristiques amoindries.

Cela est le cas, notamment, dans le modèle d'utilité allemand No 78 23 347 et dans le brevet américain No 4 667 840.

Dans l'un et l'autre cas, la boîte d'encastrement proposée comporte un boîtier, qui, présentant une paroi latérale et un fond, forme un logement ouvert vers l'avant et est ainsi propre à la mise en place d'un quelconque appareillage, et un manchon, qui entoure le boîtier, à distance de celui-ci, et qui, en pratique, s'étend au-delà du fond de ce boîtier.

Ainsi se trouve généré, au-delà du boîtier, un espace, qui s'étend pour l'essentiel autour de ce boîtier, à la manière, en quelque sorte, d'une double paroi, tout en se prolongeant, en pratique, à l'arrière de celui-ci, et qui est utilement mis à profit pour l'implantation d'un quelconque matériau d'isolation.

Dans le modèle d'utilité allemand No 78 23 347, le manchon appartient à un deuxième boîtier dans lequel doit être engagé le premier, et l'espace, unique, formé entre ce boîtier et le premier, ouvre naturellement vers l'avant.

Bien que cette disposition puisse donner satisfaction, elle implique la mise en oeuvre de deux boîtiers distincts, qu'il s'agit de positionner et de solidariser l'un par rapport à l'autre, ce qui ne manque pas de compliquer quelque peu les opérations correspondantes.

En outre, dans ce modèle d'utilité allemand No 78 23 347, le matériau d'isolation mis en oeuvre est un matériau expansible, c'est-à-dire un matériau qui, se présentant initialement sous une forme plus ou moins compacte, est susceptible de s'expanser, en l'espèce sous l'action du feu, en générant alors une sorte de mousse.

Ainsi est évité un garnissage, qui, autrement, devant intervenir avant l'engagement du boîtier interne dans le boîtier externe et/ou après cet engagement, serait particulièrement malaisé à assurer, et qui risquerait, en outre, de n'être qu'approximatif et aléatoire, au détriment des effets escomptés.

Mais si, ainsi, la performance au feu peut à la rigueur être convenablement restituée au moment voulu, il n'en est pas de même, dans l'intervalle, de l'isolation phonique et/ou thermique.

Dans le brevet américain No 4 667 840, il est prévu, en sus du boîtier et du manchon, un voile, qui, s'étendant globalement transversalement par rapport à l'ensemble, solidarise le manchon au boîtier, en étant en pratique d'un seul tenant avec ceux-ci.

Les opérations de mise en oeuvre se trouvent ainsi singulièrement simplifiées.

En outre, le garnissage de l'espace, unique, formé entre le boîtier, le manchon et le voile est aisé, puisque, déjà préexistant, cet espace n'implique pas, pour sa création, un quelconque mouvement relatif entre les éléments qui le délimitent.

De ce fait, cet espace peut avantageusement être totalement rempli dès l'origine, et le matériau d'isolation mis en oeuvre pour ce remplissage peut alors avantageusement être du plâtre, comme le matériau constitutif du parement concerné, au bénéfice d'une reconstitution plus rigoureuse de la continuité des caractéristiques de celui-ci.

Mais, en pratique, dans ce brevet américain No 4 667 840, le voile s'étend à l'avant du boîtier, au voisinage du débouché de celui-ci.

L'espace à remplir ouvre donc vers l'arrière.

Indépendamment d'autres inconvénients, il résulte, de cette disposition, qu'il n'est pas possible de contrôler, de l'avant, que l'espace à remplir a été convenablement comblé, au détriment, éventuellement, de la sécurité.

La présente invention a d'une manière générale pour objet une disposition permettant d'éviter cet inconvénient.

De manière plus précise, elle a pour objet une boîte d'encastrement du genre comportant un boîtier, qui, présentant une paroi latérale et un fond, forme un logement ouvert vers l'avant, un manchon, qui entoure le boîtier, à distance de celui-ci, en s'étendant au-delà du fond de ce boîtier, et un voile, qui, s'étendant globalement transversalement par rapport à l'ensemble, solidarise le manchon au boîtier, cette boîte d'encastrement étant d'une manière générale caractérisée en ce que le boîtier, le manchon et le voile définissent, conjointement, deux espaces distincts, qui interviennent de part et d'autre du voile, et dont chacun est susceptible d'être mis à profit pour l'implantation d'un quelconque matériau d'isolation, à savoir, un espace avant accessible de l'avant, et un espace arrière accessible de l'arrière, et en ce que ces deux espaces sont en communication l'un avec l'autre.

Ainsi, pour ce qui concerne, au moins, l'espace avant, il est avantageusement possible de contrôler de l'avant la mise en oeuvre effective d'un matériau d'isolation.

En outre, bien que la mise en oeuvre d'un tel matériau d'isolation soit, en pratique, réalisée en deux temps, d'abord à l'arrière, puis à l'avant, toute la continuité souhaitable pour ce matériau d'isolation est rétablie, grâce à la communication existant entre les deux espaces correspondants.

Par exemple, pour l'établissement de cette communication, le voile assurant la solidarisation du manchon au boîtier est ajouré d'au moins un évidement, et, préférentiellement, de plusieurs évidements qui interviennent de place en place le long de sa surface.

Quoi qu'il en soit, outre la continuité qu'elle assure pour le matériau d'isolation mis en place, cette communication présente d'autres avantages.

Tout d'abord, lors de la mise en place de ce matériau d'isolation dans l'espace avant, elle intervient à la manière d'un évent, et d'un trop plein, ce qui permet un bourrage particulièrement efficace de cet espace avant.

En outre, après la prise du matériau d'isolation mis en place, elle assure avantageusement une cohésion entre la partie de ce matériau d'isolation présente dans l'espace avant et la partie présente dans l'espace arrière, au bénéfice de la tenue de cette dernière.

Les caractéristiques et avantages de l'invention ressortiront, d'ailleurs, de la description qui va suivre, à titre d'exemple, en référence aux dessins schématiques annexés sur lesquels :
la figure 1 est une vue partielle en coupe d'une cloison sèche dans laquelle doit être implantée une boîte d'encastrement suivant l'invention ;
la figure 2 est, à échelle supérieure, une vue en perspective de cette boîte d'encastrement, vue de l'avant ;
la figure 3 en est, à échelle encore supérieure, une autre vue en perspective, vue de l'arrière ;
la figure 4 est, à échelle encore supérieure, une vue partielle en coupe de la boîte d'encastrement suivant l'invention, suivant la ligne IV-IV de la figure 3 ;
les figures 5A et 5B sont des vues en coupe qui, déduites de celle de la figure 1, illustrent deux phases successives de mise en oeuvre de la boîte d'encastrement suivant l'invention ;
la figure 6 est une vue en perspective d'une autre boîte d'encastrement suivant l'invention, vue de l'avant ;
la figure 7 est une vue en perspective de cette autre boîte d'encastrement, vue de l'arrière ;
la figure 8 est une vue de dessus d'une autre boîte d'encastrement suivant l'invention.

Tel qu'illustré sur ces figures, et de manière connue en soi, il s'agit, globalement, d'implanter une boîte d'encastrement 10 dans une quelconque cloison sèche 11, pour la localisation, sur celle-ci, d'un quelconque appareillage non représenté, et, par exemple, d'un quelconque appareillage électrique, tel qu'interrupteur, prise de courant ou autre.

La cloison sèche 11 ne relevant pas de la présente invention, elle ne sera pas décrite en détail ici.

Il suffira d'indiquer que, dans la forme de réalisation représentée, elle comporte, parallèlement l'un à l'autre, deux parements 12, qui sont établis à distance l'un de l'autre, en ménageant entre eux un espace 13 vide ou susceptible d'être évidé, et dont un est ajouré d'une ouverture 14 propre à l'engagement de la boîte d'encastrement 10.

De manière connue en soi, cette boîte d'encastrement 10 comporte, globalement, un boîtier 15, qui, destiné à recevoir l'appareillage concerné, forme un logement 16 ouvert vers l'avant, en présentant, pour ce faire, une paroi latérale 18 et un fond 19, un manchon 20, qui entoure le boîtier 15, à distance de celui-ci, et, plus précisément, à distance de sa paroi latérale 18, en s'étendant au-delà du fond 19 de ce boîtier 15 par rapport à son débouché, et un voile 21, qui, s'étendant globalement transversalement par rapport à l'ensemble, sur une partie au moins du pourtour du manchon 20, solidarise ce manchon 20 au boîtier 15.

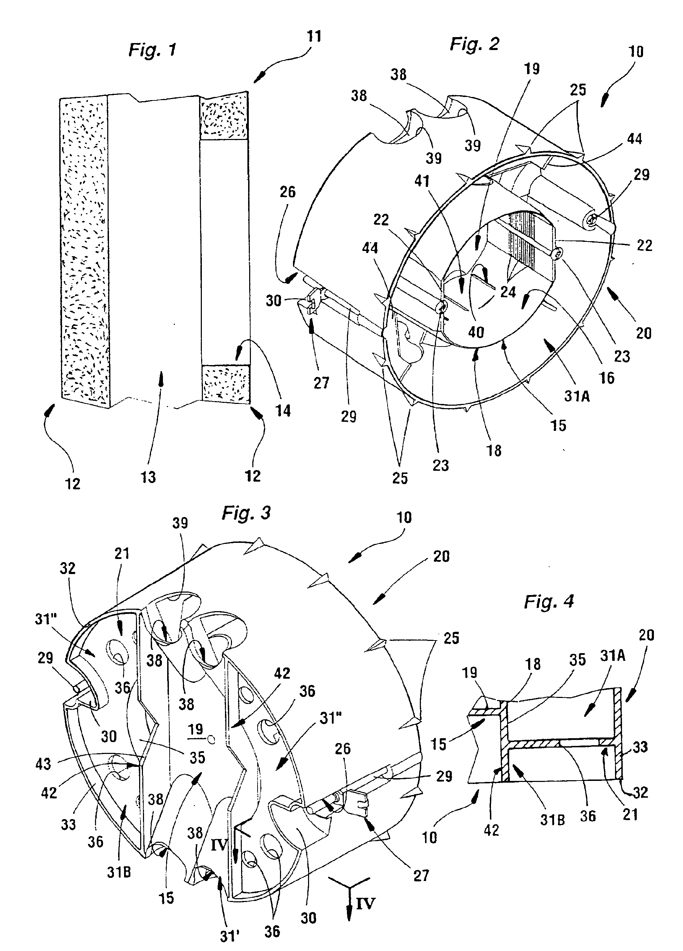

Dans les formes de réalisation représentées sur les figures 2 à 7, le boîtier 15 a, en plan, un contour globalement circulaire, et il en est de même du manchon 20.

Il en est également de même pour l'ouverture 14 du parement 12 concerné de la cloison sèche 11, cette ouverture 14 étant pratiquée suivant le contour du manchon 20.

En pratique, dans les formes de réalisation représentées, la paroi latérale 18 du boîtier 15 est globalement cylindrique.

De manière connue en soi, cette paroi latérale 18 forme, localement, en positions diamétralement opposées l'un par rapport à l'autre, deux méplats 22, à la faveur de chacun desquels intervient une vis 23, pour la fixation de l'appareillage concerné lorsque cette fixation se fait à l'aide de telles vis 23, et dont la surface intérieure présente, transversalement, des stries 24, pour le cas où cette fixation se fait à l'aide de griffes.

Les dispositions correspondantes étant bien connues par elles-mêmes, elles ne seront pas décrites plus en détail ici.

Dans les formes de réalisation représentées, le manchon 20 est lui-même globalement cylindrique.

Du côté du débouché du boîtier 15, il s'étend à niveau avec celui-ci.

Pour son assujettissement au parement 12 concerné de la cloison sèche 11, le manchon 20 comporte, d'une part, des bossages 25, en forme de coin, qui, répartis circulairement tout autour de son pourtour, font saillie de place en place sur sa surface extérieure, au niveau du débouché du boîtier 15, et, d'autre part, au moins un renfoncement 26, qui s'étend en creux sur sa surface extérieure, suivant sensiblement une génératrice, et à la faveur duquel intervient une griffe 27 commandée par une vis 29.

En pratique, deux griffes 27 sont prévues, commandées chacune par une vis 29, et elles interviennent en positions diamétralement opposées l'une par rapport à l'autre, au droit, chacune respectivement, des méplats 22 de la paroi latérale 18 du boîtier 15.

En pratique, également, chaque renfoncement 26 forme, à sa base, c'est-à-dire du côté opposé aux bossages 25, une niche 30, élargie, pour l'escamotage initial de la griffe 27 correspondante dans le contour extérieur hors tout du manchon 20.

Les dispositions correspondantes sont, elles aussi, bien connues par elles-mêmes, et elles ne seront donc pas non plus décrites plus en détail ici.

Suivant l'invention, le boîtier 15, le manchon 20 et le voile 21 définissent, conjointement, deux espaces 31A, 31B distincts, qui interviennent de part et d'autre du voile 21, et dont chacun est susceptible d'être mis à profit pour l'implantation d'un quelconque matériau d'isolation, suivant des dispositions décrites plus en détail ultérieurement, à savoir, entre la paroi latérale 18 du boîtier 15 et le manchon 20, un espace avant 31A accessible de l'avant, et, à l'arrière du fond 19 du boîtier 15, un espace arrière 31B accessible de l'arrière, et ces deux espaces 31A, 31B sont en communication l'un avec l'autre.

Dans les formes de réalisation représentées, le voile 21 se raccorde au manchon 20 en retrait par rapport au bord libre 32 de ce manchon 20, sur une partie, au moins, du pourtour de celui-ci, du côté opposé au débouché du boîtier 15, au bénéfice de l'amplitude ainsi donnée à l'espace arrière 31B.

Autrement dit, dans ces formes de réalisation, le manchon 20 forme, à la périphérie du voile 21, sur une partie au moins du contour de celui-ci, du côté opposé au débouché du boîtier 15, un rebord 33, qui délimite pour sa part l'espace arrière 31B, en suivant le contour du ou des renfoncements 26, et, plus précisément, de la niche 30 formée par ces renfoncements 26.

Cependant, dans les formes de réalisation représentées, le voile 21 intervient sensiblement au voisinage du fond 19 du boîtier 15.

Plus précisément, dans ces formes de réalisation, le voile 21 s'étend à un niveau intermédiaire entre le fond 19 du boîtier 15 et le bord libre 32 correspondant du manchon 20, et, pour son raccordement à ce voile 21, la paroi latérale 18 du boîtier 15 comporte, au moins localement, suivant des dispositions décrites plus en détail ultérieurement, un prolongement 35.

Pour l'établissement d'une communication entre les deux espaces 31A, 31 B, le voile 21 est, dans les formes de réalisation représentées, ajouré d'au moins un évidement 36.

Préférentiellement, et cela est le cas dans les formes de réalisation représentées, le voile 21 est ajouré de plusieurs évidements 36, qui interviennent de place en place le long de sa surface.

Dans la forme de réalisation plus particulièrement représentée sur les figures 2 à 5, ces évidements 36 interviennent à distance du rebord 33 formé par le manchon 20, et il s'agit de perçages de contour circulaire.

Par exemple, et tel que représenté, il peut y avoir ainsi des évidements 36 de diamètres différents.

Dans les formes de réalisation représentées, le voile 21 forme, localement, pour le guidage d'un conduit, non représenté, propre au logement des conducteurs nécessaires à la desserte de l'appareillage concerné, au moins une gouttière 38, qui s'étend du manchon 20 au boîtier 15, et dont la concavité est tournée du côté de l'espace avant 31A.

En pratique, dans les formes de réalisation représentées, il y a quatre gouttières 38, à raison de deux paires de gouttières disposées parallèlement l'une à l'autre, au contact l'une de l'autre, en positions diamétralement opposées les unes par rapport aux autres, en croix avec les renfoncements 26.

En pratique, également, ces gouttières 38 interrompent localement le rebord 33 formé par le manchon 20, et elles s'étendent en oblique par rapport au fond 19 du boîtier 15.

Du côté du manchon 20, les gouttières 38 débouchent chacune à l'extérieur par un ajour 39, qui affecte ce manchon 20 et/ou le voile 21.

Du côté du boîtier 15, les gouttières 38 s'étendent chacune au droit d'un ajour 40 de ce boîtier 15, qui affecte sa paroi latérale 18 et/ou son fond 19, et qui, tel que représenté, est éventuellement occulté par des moyens d'obturation 41 défonçables.

Par exemple, et cela est le cas dans la forme de réalisation représentée sur les figures 2 à 5, ces moyens d'obturation 41 sont constitués par un opercule qui, prédécoupé dans la paroi latérale 18 du boîtier 15, est défonçable.

Dans les formes de réalisation représentées, les gouttières 38 interviennent entre deux nervures 42, qui s'étendent chacune suivant une corde du manchon 20.

En pratique, ces nervures 42 sont à niveau avec le bord libre 32 du manchon 20, et elles sont parallèles l'une à l'autre.

Dans les formes de réalisation représentées, les deux nervures 42 présentent, chacune, au moins une échancrure 43.

Par exemple, et tel que représenté, seule une telle échancrure 43 est prévue, et elle intervient dans la zone médiane des nervures 42.

Dans les formes de réalisation représentées, cette échancrure 43 a un contour triangulaire.

Du fait des nervures 42, l'espace arrière 31B est, dans les formes de réalisation représentées, fractionné en trois portions, à savoir, une portion médiane 31', dans laquelle s'étendent les gouttières 38, et deux portions latérales 31", sur chacune desquelles mord la niche 30 du renfoncement 26 correspondant.

Dans la portion médiane 31', qui est donc celle comprise entre les deux nervures 42, le voile 21 se réduit aux gouttières 38, et, de ce fait, il est dépourvu de tout évidement.

Corollairement, c'est au droit de chacune des portions latérales 31" que la paroi latérale 18 du boîtier 15 comporte un prolongement 35 pour le raccordement du voile 21 à celui-ci.

Dans les formes de réalisation représentées, l'espace avant 31A est plus ou moins cloisonné par des nervures 44 qui s'étendent radialement en refend à compter du manchon 20.

Préférentiellement, enfin, et cela est le cas dans les formes de réalisation représentées, le boîtier 15, le manchon 20 et le voile 21 sont d'un seul tenant, en formant, conjointement, de moulage, une seule et même pièce.

Pour la mise en oeuvre de la boîte d'encastrement 10 suivant l'invention, il peut, par exemple, être procédé comme suit.

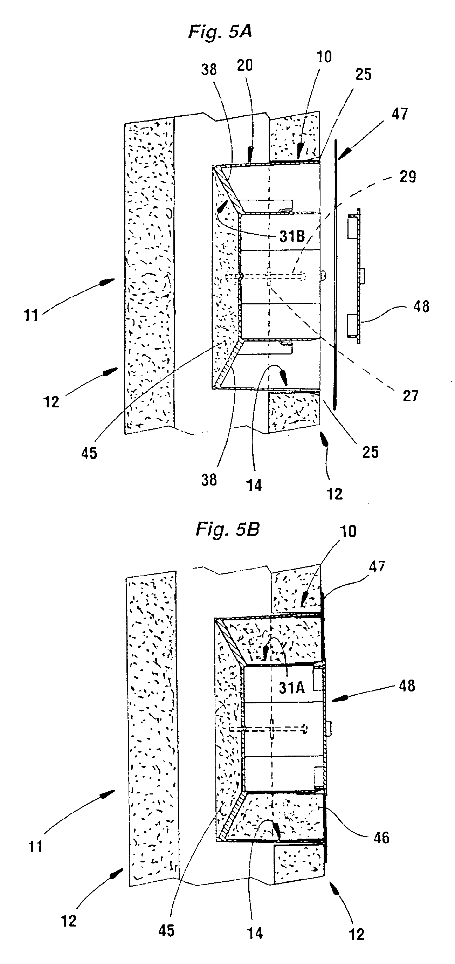

Dans un premier temps, les conduits servant au logement des conducteurs électriques, extraits de la cloison sèche 11, sont introduits dans la boîte d'encastrement 10 à la faveur de l'une et/ou l'autre de ses gouttières 38, et une masse 45 de matériau d'isolation, par exemple du plâtre, est mise en place dans son espace arrière 31 B, jusqu'à combler celui-ci, figure 5A.

Ainsi garnie de cette masse 45 de matériau d'isolation, la boîte d'encastrement 10 est engagée dans l'ouverture 14 de la cloison sèche 11, jusqu'à venir à ras avec la surface extérieure du parement 12 concerné de celle-ci, tel que représenté sur la figure 5A.

Ce faisant, les bossages 25 du manchon 20 mordent dans le parement 12, et, plus précisément, dans la tranche de celui-ci, ce qui suffit à assurer l'ancrage, dans un sens, de la boîte d'encastrement 10 par rapport à ce parement 12.

Par action sur les vis 29, les griffes 27 sont dégagées de la niche 30 des renfoncements 26 du manchon 20, et, faisant dès lors saillie radialement vers l'extérieur par rapport à celui-ci, elles sont amenées au contact de la surface intérieure du parement 12, ce qui suffit à assurer la retenue de la boîte d'encastrement 10 par rapport à ce parement 12 dans le sens opposé au précédent.

Dans un deuxième temps, une masse 46 de matériau d'isolation est à son tour mise en place dans l'espace avant 31A de la boîte d'encastrement 10, jusqu'à combler cet espace avant 31A, comme représenté sur la figure 5B.

Il suffit, ensuite, de rapporter, si désiré, en surface, une rondelle de finition 47, qui, recouvrant l'espace avant 31A de la boîte d'encastrement 10, s'étend préférentiellement aussi au-delà de celle-ci, comme représenté.

Si désiré, également, le logement 16 formé par le boîtier 15 peut alors être fermé par un couvercle 48 jusqu'à sa mise en oeuvre.

Ainsi qu'il est aisé de le comprendre, au contact l'une de l'autre à la faveur des évidements 36 du voile 21, les masses 45 et 46 de matériau d'isolation se solidarisent avantageusement l'une à l'autre lors de leur prise.

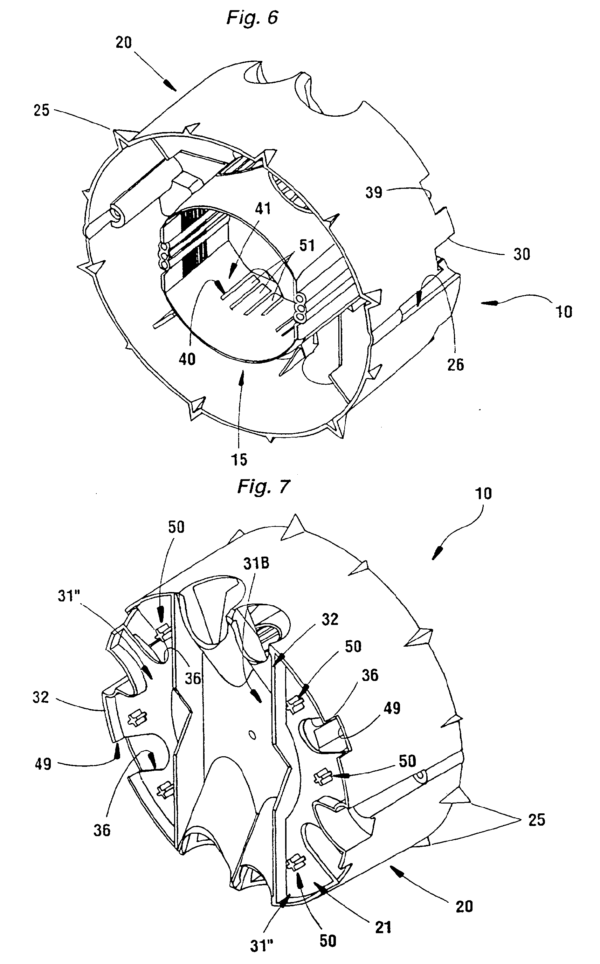

Dans la forme de réalisation représentée sur les figures 6 et 7, l'un au moins des évidements 36 du voile 21 intervient à la périphérie de celui-ci.

Par exemple, et tel que représenté, il en est ainsi pour chacun des évidements 36 du voile 21.

Ainsi, ces évidements 36 se trouvent avantageusement agrandis, ce qui minimise le risque qu'ils puissent venir intempestivement se boucher lors de la mise en place de la masse 45 de matériau d'isolation, et ce qui augmente en outre avantageusement la surface de contact de cette masse 45 avec la masse 46 présente dans l'espace avant 31A, au bénéfice de la cohésion de l'ensemble.

En outre, dans cette forme de réalisation, pour l'un au moins des évidements 36 du voile 21 qui interviennent à la périphérie de celui-ci, le manchon 20 présente, en correspondance, une échancrure 49 à compter de son bord libre 32.

Dans la forme de réalisation représentée, il en est ainsi pour chacun des évidements 36 du voile 21.

Les échancrures 49 ainsi mises en oeuvre favorisent une évacuation du matériau d'isolation en direction du rebord 33 du manchon 20 lors de la mise en place de la masse 45 de matériau d'isolation, au bénéfice d'un bon étalement de cette dernière dans cette direction sur le voile 21.

Elles contribuent également à une minimisation du risque d'obstruction pour les évidements 36.

Favorisant, enfin, un écoulement en matériau d'isolation vers l'extérieur, elles conduisent avantageusement à la formation de bossages, voire d'un bourrelet, à l'extérieur de la boîte d'encastrement 10, au bénéfice d'une augmentation de la masse globale de matériau d'isolation mise en oeuvre, et, donc, au bénéfice de l'inertie thermique de l'ensemble.

Par ailleurs, dans la forme de réalisation représentée sur les figures 6 et 7, le voile 21 présente des plots 50 en saillie, de place en place, sur sa surface extérieure, dans les portions latérales 31", au moins, de l'espace arrière 31B, pour y parfaire l'ancrage de la masse 45 de matériau d'isolation.

Par exemple, et tel que représenté, de tels plots 50 ne sont présents que dans les portions latérales 31" de l'espace arrière 31 B.

Dans la forme de réalisation représentée, ces plots 50 ont, en section transversale, un contour cruciforme.

Enfin, dans la forme de réalisation représentée sur les figures 6 et 7, les moyens d'obturation 41 associés à chaque ajour 40 du boîtier 15 sont constitués de languettes élastiquement déformables 51.

Pour le reste, les dispositions sont du même type que celles précédemment décrites, et il en est de même pour la mise en oeuvre.

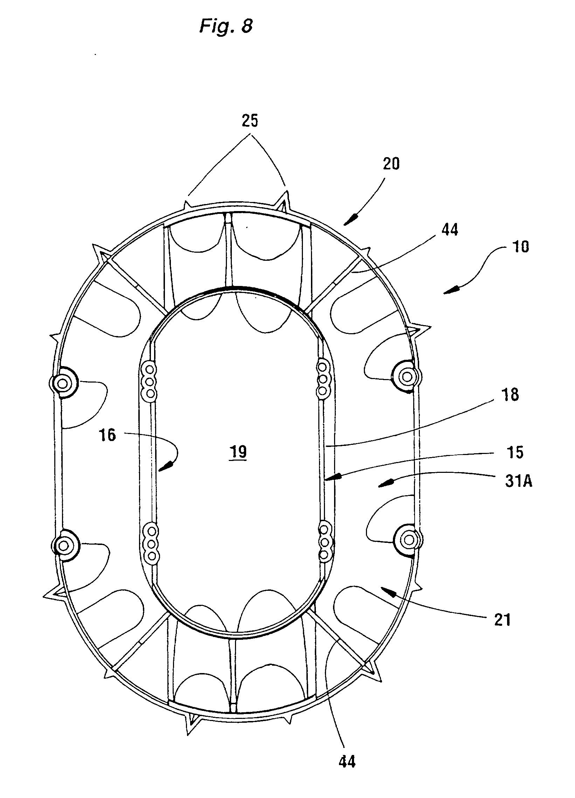

Il en est de même pour la forme de réalisation représentée sur la figure 8 suivant laquelle, pour une mise en place, côte à côte, de deux appareillages, la boîte d'encastrement 10 suivant l'invention a, de manière connue en soi, un contour oblong.

## Revendications

1. Boîte d'encastrement du genre comportant un boîtier (15), qui, présentant une paroi latérale (18) et un fond (19), forme un logement (16) ouvert vers l'avant, un manchon (20), qui entoure le boîtier (15), à distance de celui-ci, en s'étendant au-delà du fond (19) de ce boîtier (15), et un voile (21), qui, s'étendant globalement transversalement par rapport à l'ensemble, solidarise le manchon (20) au boîtier (15), **caractérisée en ce que** le boîtier (15), le manchon (20) et le voile (21) définissent, conjointement, deux espaces (31 A, 31 B) distincts, qui interviennent de part et d'autre du voile (21), et dont chacun est susceptible d'être mis à profit pour l'implantation d'un quelconque matériau d'isolation, à savoir, un espace avant (31 A) accessible de l'avant, et un espace arrière (31 B) accessible de l'arrière, et **en ce que** ces deux espaces (31 A, 31 B) sont en communication l'un avec l'autre.

2. Boîte d'encastrement suivant la revendication 1, **caractérisée en ce que**, pour l'établissement d'une communication entre les deux espaces (31 A, 31 B), le voile (21) est ajouré d'au moins un évidement (36).

3. Boîte d'encastrement suivant la revendication 2, **caractérisée en ce que** le voile (21) est ajouré de plusieurs évidements (36), qui interviennent de place en place.

4. Boîte d'encastrement suivant la revendication 3, **caractérisée en ce que** l'un au moins des évidements (36) du voile (21) intervient à la périphérie de celui-ci.

5. Boîte d'encastrement suivant l'une quelconque des revendications 1 à 4, **caractérisée en ce que** le voile (21) se raccorde au manchon (20) en retrait par rapport au bord libre (32) de ce manchon (20), du côté opposé au débouché du boîtier (15).

6. Boîte d'encastrement suivant les revendications 4 et 5, prises conjointement, **caractérisée en ce que**, pour l'un au moins des évidements (36) du voile (21) qui interviennent à la périphérie de celui-ci, le manchon (20) présente, en correspondance, une échancrure (49) à compter de son bord libre (32).

7. Boîte d'encastrement suivant l'une quelconque des revendications 1 à 6, **caractérisée en ce que** le voile (21) intervient au voisinage du fond (19) du boîtier (15).

8. Boîte d'encastrement suivant les revendications 5 et 7, prises conjointement, **caractérisée en ce que** le voile (21) s'étend à un niveau intermédiaire entre le fond (19) du boîtier (15) et le bord libre (32) correspondant du manchon (20), et, pour son raccordement à ce voile (21), la paroi latérale (18) du boîtier (15) comporte, au moins localement, un prolongement (35).

9. Boîte d'encastrement suivant l'une quelconque des revendications 1 à 8, **caractérisée en ce que** le voile (21) forme, localement, au moins une gouttière (38) qui s'étend du manchon (20) au boîtier (15).

10. Boîte d'encastrement suivant la revendication 9, **caractérisée en ce que**, du côté du manchon (20), la gouttière (38) débouche à l'extérieur par un ajour (39) qui affecte ce manchon (20) et/ou le voile (21).

11. Boîte d'encastrement suivant l'une quelconque des revendications 9, 10, **caractérisée en ce que**, du côté du boîtier (15), la gouttière (38) s'étend au droit d'un ajour (40) de ce boîtier (15), qui affecte sa paroi latérale (18) et/ou son fond (19), et qui est éventuellement occulté par des moyens d'obturation (41) défonçable.

12. Boîte d'encastrement suivant l'une quelconque des revendications 9 à 11, **caractérisée en ce que** la gouttière (38) s'étend en oblique par rapport au fond (19) du boîtier (15).

13. Boîte d'encastrement suivant l'une quelconque des revendications 9 à 12, **caractérisée en ce que** la gouttière (38) intervient entre deux nervures (42), qui s'étendent chacune suivant une corde du manchon (20).

14. Boîte d'encastrement suivant la revendication 13, **caractérisée en ce que** les deux nervures (42) sont à niveau avec le bord libre (32) du manchon (20).

15. Boîte d'encastrement suivant l'une quelconque des revendications 12, 13, **caractérisée en ce que** les deux nervures (42) sont parallèles l'une à l'autre.

16. Boîte d'encastrement suivant l'une quelconque des revendications 12 à 15, **caractérisée en ce que** les deux nervures (42) présentent, chacune, au moins une échancrure (43).

17. Boîte d'encastrement suivant l'une quelconque des revendications 13 à 16, **caractérisée en ce que**, dans la portion médiane (31') de l'espace arrière (31 B) comprise entre les deux nervures (42), le voile (21) est dépourvu de tout évidement.

18. Boîte d'encastrement suivant l'une quelconque des revendications 9 à 17, **caractérisée en ce qu'**il y a quatre gouttières (38), à raison de deux paires de gouttières disposées parallèlement l'une à l'autre, en positions diamétralement opposées les unes par rapport aux autres.

19. Boîte d'encastrement suivant l'une quelconque des revendications 1 à 18, **caractérisée en ce que** le voile (21) présente des plots (50) en saillie, de place en place, sur sa surface extérieure.

20. Boîte d'encastrement suivant l'une quelconque des revendications 1 à 19, **caractérisée en ce que** le manchon (20) comporte au moins un renfoncement (26), à la faveur duquel intervient une griffe (27) commandée par une vis (29), et il forme, à la périphérie du voile (21), un rebord (33), qui délimite pour sa part l'espace arrière (31 B), en suivant le contour du ou des renfoncements (26).

21. Boîte d'encastrement suivant l'une quelconque des revendications 1 à 20, **caractérisée en ce que** le boîtier (15), le manchon (20) et le voile (21) sont d'un seul tenant, en formant, conjointement, une seule et même pièce.

## Claims

1. A wall box of the type comprising a casing (15) having a side wall (18) and a base (19) which form a recess (16) which is open at the front, a sheath (20) which surrounds the casing (15) at a distance therefrom, extending beyond the base (19) of said casing (15), and a web (21) extending generally transversely with respect to the assembly and integrates the sheath (20) with the casing (15), **characterized in that** the casing (15), the sheath (20) and the web (21) together define two distinct spaces (31A, 31B) which are positioned either side of the web (21) and wherein each is capable of being used to install any type of insulating material, namely a front space (31A) which is accessible from the front and a rear space (31B) which is accessible from the rear, and **in that** said two spaces (31A, 31B) are in communication with each other.

2. A wall box according to claim 1, **characterized in that** in order to establish communication between the two spaces (31A, 31B), the web (21) is perforated by at least one hole (36).

3. A wall box according to claim 2, **characterized in that** the web (21) is perforated by a plurality of holes (36) positioned here and there.

4. A wall box according to claim 3, **characterized in that** at least one of the holes (36) of the web (21) is positioned at the periphery thereof.

5. A wall box according to any one of claims 1 to 4, **characterized in that** the web (21) is connected to the sheath (20) in a manner which is set back with respect to the free edge (32) of said sheath (20) on the side which is opposite to the opening of the casing (15).

6. A wall box according to claim 4 or claim 5 taken together, **characterized in that** for at least one of the holes (36) of the web (21) positioned at the periphery thereof, the sheath (20) has a corresponding notch (49) which cuts into its free edge (32).

7. A wall box according to any one of claims 1 to 6, **characterized in that** the web (21) is positioned close to the base (19) of the casing (15).

8. A wall box according to claims 5 and 7 taken together, **characterized in that** the web (21) extends at an intermediate level between the base (19) of the casing (15) and the corresponding free edge (32) of the sheath (20) and in order to connect it to said web (21), the side wall (18) of the casing (15) at least locally comprises an extension (35).

9. A wall box according to any one of claims 1 to 8, **characterized in that** the web (21) locally forms at least one channel (38) which extends from the sheath (20) to the casing (15).

10. A wall box according to claim 9, **characterized in that** on the sheath (20) side, the channel (38) opens to the outside via a perforation (39) which is located in said sheath (20) and/or the web (21).

11. A wall box according to claim 9 or claim 10, **characterized in that** on the casing (15) side, the channel (38) extends at right angles to a perforation (40) of said casing (15) which is located in its side wall (18) and/or its base (19) and which is optionally closed by removable closing means (41).

12. A wall box according to any one of claims 9 to 11, **characterized in that** the channel (38) extends obliquely with respect to the base (19) of the casing (15).

13. A wall box according to any one of claims 9 to 12, **characterized in that** the channel (38) is positioned between two ribs (42) each of which extends along a chord of the sheath (20).

14. A wall box according to claim 13, **characterized in that** the two ribs (42) are level with the free edge (32) of the sheath (20).

15. A wall box according to claim 12 or claim 13, **characterized in that** the two ribs (42) are parallel to each other.

16. A wall box according to any one of claims 12 to 15, **characterized in that** the two ribs (42) each exhibit at least one notch (43).

17. A wall box according to any one of claims 13 to 16, **characterized in that** in the median portion (31') of the rear space (31B) between the two ribs (42), the web (21) is free of any holes.

18. A wall box according to any one of claims 9 to 17, **characterized in that** there are four channels (38) in two pairs of channels disposed parallel to each other in positions diametrically opposite to each other.

19. A wall box according to any one of claims 1 to 18, **characterized in that** the web (21) has projecting studs (50) positioned here and there on its outer surface.

20. A wall box according to any one of claims 1 to 19, **characterized in that** the sheath (20) comprises at least one recess (26) in which a lug (27) is positioned which is controlled by a screw (29) and it forms, at the periphery of the web (21), a rim (33) which itself defines the rear space (31B) by following the contour of the reinforcement or reinforcements (26).

21. A wall box according to any one of claims 1 to 20, **characterized in that** the casing (15), the sheath (20) and the web (21) are all in one piece and together form a single part.

## Patentansprüche

1. Wanddose der Art mit einem Gehäuse (15), das eine Seitenwand (18) und einen Boden (19) aufweisend eine nach vorne offene Aufnahme (16) bildet, einer Hülse (20), die das Gehäuse (15) mit Abstand zu diesem umgibt und sich hierbei über den Boden (19) des Gehäuses (15) hinaus erstreckt, und einer Abdeckung (21), die bezüglich des Ganzen allgemein quer verlaufend die Hülse (20) fest mit dem Gehäuse (15) verbindet,
**dadurch gekennzeichnet, dass** das Gehäuse (15), die Hülse (20) und die Abdeckung (21) zusammen zwei getrennte Räume (31A, 31B) bilden, die beiderseits der Abdeckung (21) angeordnet sind, und von denen jeder zum Einbau eines beliebigen Isolierstoffs genutzt zu werden vermag, und zwar ein von der Vorderseite aus zugänglicher vorderer Raum (31A) und ein von der Rückseite aus zugänglicher hinterer Raum (31B), und dass diese beiden Räume (31A, 31B) miteinander in Verbindung stehen.

2. Wanddose nach Anspruch 1,
**dadurch gekennzeichnet, dass** die Abdeckung (21) zum Herstellen einer Verbindung zwischen den beiden Räumen (31A, 31B) mit wenigstens einer Aussparung (36) durchbrochen ist.

3. Wanddose nach Anspruch 2,
**dadurch gekennzeichnet, dass** die Abdeckung (21) mit mehreren Aussparungen (36) durchbrochen ist, die hier und dort angeordnet sind.

4. Wanddose nach Anspruch 3,
**dadurch gekennzeichnet, dass** wenigstens eine der Aussparungen (36) der Abdeckung (21) an deren Rand angeordnet ist.

5. Wanddose nach einem der Ansprüche 1 bis 4,
**dadurch gekennzeichnet, dass** sich die Abdeckung (21) auf der der Öffnung des Gehäuses (15) entgegengesetzten Seite bezüglich des freien Rands (32) der Hülse (20) zurückversetzt an die Hülse (20) anschließt.

6. Wanddose nach den Ansprüchen 4 und 5 in Verbindung miteinander,
**dadurch gekennzeichnet, dass** die Hülse (20) bei wenigstens einer der Aussparungen (36) der Abdeckung (21), die an deren Rand angeordnet sind, mit diesen korrespondierend einen Ausschnitt (49) ausgehend von ihrem freien Rand (32) aufweist.

7. Wanddose nach einem der Ansprüche 1 bis 6,
**dadurch gekennzeichnet, dass** die Abdeckung (21) in der Nähe des Bodens (19) des Gehäuses (15) angeordnet ist.

8. Wanddose nach den Ansprüchen 5 und 7 in Verbindung miteinander,
**dadurch gekennzeichnet, dass** die Abdeckung (21) in einer mittleren Höhe zwischen dem Boden (19) des Gehäuses (15) und dem jeweiligen freien Rand (32) der Hülse (20) verläuft, und die Seitenwand (18) des Gehäuses (15) zu ihrer Verbindung mit der Abdeckung (21) wenigstens stellenweise eine Verlängerung (35) aufweist.

9. Wanddose nach einem der Ansprüche 1 bis 8,
**dadurch gekennzeichnet, dass** die Abdeckung (21) stellenweise wenigstens eine Rinne (38) bildet, die von der Hülse (20) zum Gehäuse (15) verläuft.

10. Wanddose nach Anspruch 9,
**dadurch gekennzeichnet, dass** die Rinne (38) auf der Seite der Hülse (20) mit einem Durchbruch (39) nach außen mündet, welcher der Hülse (20) und/oder der Abdeckung (21) zugeordnet ist.

11. Wanddose nach einem der Ansprüche 9, 10,
**dadurch gekennzeichnet, dass** die Rinne (38) auf der Seite des Gehäuses (15) rechtwinklig zu einem Durchbruch (40) des Gehäuses (15) verläuft, welcher dessen Seitenwand (18) und/oder dessen Boden (19) zugeordnet ist, und der gegebenenfalls durch eindrückbare Verschlussmittel (41) verdeckt ist.

12. Wanddose nach einem der Ansprüche 9 bis 11,
**dadurch gekennzeichnet, dass** die Rinne (38) bezüglich des Bodens (19) des Gehäuses (15) schräg verläuft.

13. Wanddose nach einem der Ansprüche 9 bis 12,
**dadurch gekennzeichnet, dass** die Rinne (38) zwischen zwei Rippen (42) angeordnet ist, die jeweils längs einer Sehne der Hülse (20) verlaufen.

14. Wanddose nach Anspruch 13,
**dadurch gekennzeichnet, dass** die beiden Rippen (42) auf gleicher Höhe mit dem freien Rand (32) der Hülse (20) liegen.

15. Wanddose nach einem der Ansprüche 12, 13,
**dadurch gekennzeichnet, dass** die beiden Rippen (42) zueinander parallel sind.

16. Wanddose nach einem der Ansprüche 12 bis 15,
**dadurch gekennzeichnet, dass** die beiden Rippen (42) jeweils wenigstens einen Ausschnitt (43) aufweisen.

17. Wanddose nach einem der Ansprüche 13 bis 16,
**dadurch gekennzeichnet, dass** die Abdeckung (21) in dem mittleren Abschnitt (31') des hinteren Raums (31B) zwischen den beiden Rippen (42) mit keinerlei Aussparung versehen ist.

18. Wanddose nach einem der Ansprüche 9 bis 17,
**dadurch gekennzeichnet, dass** aufgrund von zwei Paar zueinander parallel angeordneten Rinnen vier Rinnen (38) vorhanden sind.

19. Wanddose nach einem der Ansprüche 1 bis 18,
**dadurch gekennzeichnet, dass** die Abdeckung (21) an ihrer Außenseite hier und dort vorstehende Stifte (50) aufweist.

20. Wanddose nach einem der Ansprüche 1 bis 19,
**dadurch gekennzeichnet, dass** die Hülse (20) wenigstens eine Einbuchtung (26) aufweist mit deren Hilfe eine durch eine Schraube (29) betätigte Kralle (27) angeordnet ist, und sie am Rand der Abdeckung (21) einen Rand (33) bildet, der seinerseits den hinteren Raum (31B) am Umfang der Einbuchtung(en) (26) entlang begrenzt.

21. Wanddose nach einem der Ansprüche 1 bis 20,
**dadurch gekennzeichnet, dass** das Gehäuse (15), die Hülse (20) und die Abdeckung (21) einstückig ausgebildet sind und dabei zusammen ein einziges Teil bilden.
